(19) Europäisches Patentamt
European Patent Office
Office européen des brevets

(11) **EP 4 024 753 B1**

(12) **FASCICULE DE BREVET EUROPEEN**

(45) Date de publication et mention
de la délivrance du brevet:
**02.08.2023  Bulletin 2023/31**

(21) Numéro de dépôt: **21218053.3**

(22) Date de dépôt: **29.12.2021**

(51) Classification Internationale des Brevets (IPC):
**H04L 9/00** *(2022.01)*      **H04L 9/06** *(2006.01)*

(52) Classification Coopérative des Brevets (CPC):
**H04L 9/003; H04L 9/0631; H04L 9/0637;**
H04L 2209/122

(54) **PROCÉDÉ ET MODULE ÉLECTRONIQUE DE CALCUL D'UNE QUANTITÉ CRYPTOGRAPHIQUE AVEC MULTIPLICATIONS SANS RETENUE, PROCÉDÉ ET DISPOSITIF ÉLECTRONIQUE DE TRAITEMENT D'UNE DONNÉE ET PROGRAMME D'ORDINATEUR ASSOCIÉS**

VERFAHREN UND ELEKTRONISCHES MODUL ZUR BERECHNUNG EINER KRYPTOGRAPHISCHEN GRÖSSE MIT ÜBERTRAGSLOSEN MULTIPLIKATIONEN, ZUGEHÖRIGES VERFAHREN UND ELEKTRONISCHE VORRICHTUNG ZUR VERARBEITUNG VON DATEN, UND COMPUTERPROGRAMM

METHOD AND ELECTRONIC MODULE FOR CALCULATING A CRYPTOGRAPHIC QUANTITY WITH CARRY-LESS MULTIPLICATIONS, RELATED METHOD AND ELECTRONIC DEVICE FOR PROCESSING DATA, AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2020  FR 2014252**

(43) Date de publication de la demande:
**06.07.2022  Bulletin 2022/27**

(73) Titulaire: **THALES**
**92400 Courbevoie (FR)**

(72) Inventeurs:
• **DUBOIS, Renaud**
**92622 GENNEVILLIERS CEDEX (FR)**
• **GARRIDO, Eric**
**92622 GENNEVILLIERS CEDEX (FR)**
• **MASCRE, Valentin**
**92622 GENNEVILLIERS CEDEX (FR)**

(74) Mandataire: **Lavoix**
**2, place d'Estienne d'Orves**
**75441 Paris Cedex 09 (FR)**

(56) Documents cités:
• **CÂMARA DANILO ET AL: "Fast Software Polynomial Multiplication on ARM Processors Using the NEON Engine", 2 septembre 2013 (2013-09-02), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 137 - 1, XP047037828, ISBN: 978-3-642-17318-9 * le document en entier ***
• **DAVID HARVEY ET AL: "Fast Polynomial Multiplication over F260", INTERNATIONAL SYMPOSIUM ON SYMBOLIC AND ALGEBRAIC COMPUTATION, ACM, 2 PENN PLAZA, SUITE 701 NEW YORK NY 10121-0701 USA, 20 juillet 2016 (2016-07-20), pages 255-262, XP058276117, DOI: 10.1145/2930889.2930920 ISBN: 978-1-4503-4380-0**

**Description**

La présente invention concerne un procédé de calcul d'une quantité cryptographique relative à une donnée, le procédé étant mis en oeuvre par un module électronique de calcul.

Le procédé de calcul comprend le calcul d'une quantité cryptographique relative à la donnée via un algorithme cryptographique, l'algorithme cryptographique comportant la mise en oeuvre d'une fonction produit configurée pour effectuer le produit de deux termes sur un corps fini de Galois à $2^T$ éléments via des multiplications sans retenue successives, Tétant un nombre entier supérieur ou égal à 8.

La présente invention concerne également un procédé de traitement d'une donnée, le procédé étant mis en oeuvre par un dispositif électronique de traitement. Le procédé de traitement comprend l'acquisition de la donnée ; le calcul d'une quantité cryptographique relative à la donnée via un tel procédé de calcul ; et la transmission, à destination d'un dispositif électronique récepteur, de la quantité cryptographique calculée.

La présente invention concerne aussi un programme d'ordinateur comportant des instructions logicielles qui, lorsqu'elles sont exécutées par un ordinateur, mettent en oeuvre un tel procédé de calcul et/ou un tel procédé de traitement.

La présente invention concerne également un module électronique de calcul d'une quantité cryptographique relative à une donnée et un dispositif électronique de traitement d'une donnée comprenant un tel module de calcul.

La présente invention concerne le domaine de la cryptographie, notamment celui de la cryptographie symétrique, en particulier pour mieux résister contre une attaque par analyse différentielle de consommation, également appelée attaque DPA (de l'anglais *Differential Power Analysis).*

Les attaques DPA sont une classe d'attaques physiques sur des composants cryptographiques qui cherchent à en extraire la clé à partir de corrélation de mesures de consommation et d'hypothèses de clé sur des données d'entrée.

L'article « All the AES you need on Cortex-M3 and M4 » de Schwabe et al décrit alors différents algorithmes AES-128, AES-192, AES-256 optimisés, avec des implémentations pour les microprocesseurs embarqués ARM Cortex M3 et M4. Ces implémentations sont plus rapides que celles préexistantes, et sont en outre en temps constant et masquées pour mieux résister contre différentes attaques, notamment des attaques par analyse de consommation.

Toutefois, ces implémentations imposent de découper les données en tranches de bits (de l'anglais *bitslice),* ce qui réduit le débit, et sont en outre relativement complexes à mettre en oeuvre.

D'autres techniques sans découpage des données en tranches de bits utilisent une tabulation pour opérer une réduction modulaire, ce qui est coûteux et en temps non-constant.

Les documents "Fast Software Polynomial Multiplication on ARM Processors Using the NEON Engine" de Camara et al et "Fast Software Polynomial Multiplication over F260" de Harvey et al concernent chacun la mise en oeuvre d'une multiplication polynomiale rapide.

On connait aussi du document EP 2 009 543 B1 un procédé mettant en oeuvre des calculs en mode compteur de Galois, également noté GCM (de l'anglais *Galois Counter Mode),* où des opérations correspondant à la vérification d'une donnée cryptée sont effectuées via des multiplications sans retenue successives.

Cependant, un tel procédé est également relativement coûteux en termes de temps de calcul.

Le but de l'invention est alors de proposer un procédé et un module de calcul d'une quantité cryptographique relative à une donnée, qui soient plus efficaces, notamment en proposant une multiplication optimisée.

A cet effet, l'invention a pour objet un procédé de calcul d'une quantité cryptographique relative à une donnée, selon la revendication 1.

Avec le procédé de calcul selon l'invention, l'algorithme cryptographique permet alors d'obtenir la quantité cryptographique de manière efficace, de par la mise en oeuvre de la fonction produit comportant seulement des multiplications sans retenue, un décalage de bit(s) et une opération OU exclusif.

Une telle fonction produit est alors efficace en termes d'opération à effectuer et de temps de calcul, notamment pour la mise en oeuvre en outre d'une technique de masquage contre une attaque DPA, telle que la technique de Trichina ou la technique d'Ishai.

En outre, les multiplications sans retenue sont typiquement effectuées en utilisant directement des instructions dédiées d'un processeur, telles que l'instruction CLMUL d'un jeu d'instructions Intel® 64 bits ou encore l'instruction PLMUL d'un jeu d'instructions ARM 64 bits.

Suivant d'autres aspects avantageux de l'invention, le procédé de calcul est selon l'une quelconque des revendications 2 à 4.

L'invention a également pour objet un procédé de traitement d'une donnée, selon la revendication 5.

Suivant un autre aspect avantageux de l'invention, le procédé de traitement comprend la caractéristique suivante :

-     la quantité cryptographique calculée est une signature électronique de la donnée ou le chiffré de la donnée.

L'invention a également pour objet un programme d'ordinateur selon la revendication 6.

L'invention a également pour objet un module électronique de calcul d'une quantité cryptographique relative à une donnée, selon la revendication 7.

L'invention a également pour objet un dispositif électronique de traitement d'une donnée, selon la revendication 8.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un dispositif électronique, selon l'invention, de traitement d'une donnée, le dispositif comprenant un module d'acquisition d'une donnée, un module de calcul d'une quantité cryptographique relative à la donnée acquise, et un module de transmission de la quantité cryptographique calculée à destination d'un dispositif électronique récepteur ;
- la figure 2 illustre une multiplication particulière de termes A, B, préalablement décomposés chacun en K sous-termes Ai, Bi, pour K égal à 3 ; et
- la figure 3 est un organigramme d'un procédé, selon l'invention, de traitement de la donnée, le procédé étant mis en oeuvre par le dispositif électronique de traitement de la figure 1.

Dans la suite de la description, le terme « inférieur(e) à » s'entend comme une inégalité stricte, c'est-à-dire comme strictement inférieur(e) à ; une inégalité non-stricte étant alors précisée par l'expression « inférieur(e) ou égal(e) à ».

De même, le terme « supérieur(e) à » s'entend comme une inégalité stricte, c'est-à-dire comme strictement supérieur(e) à ; une inégalité non-stricte étant alors précisée par l'expression « supérieur(e) ou égal(e) à ».

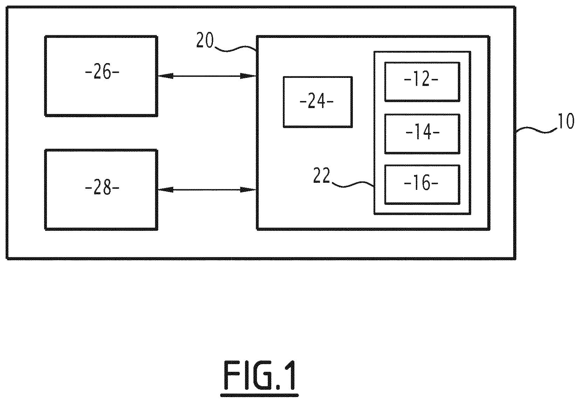

Sur la figure 1, un dispositif électronique de traitement 10 est configuré pour traiter une donnée D, et comprend un module d'acquisition 12 configuré pour acquérir la donnée D, un module de calcul 14 configuré pour calculer une quantité cryptographique S relative à la donnée acquise D, et un module de transmission 16 configuré pour transmettre, à destination d'un dispositif électronique récepteur, non représenté, la quantité cryptographique calculée S.

La donnée D est par exemple un message, typiquement exprimé sous forme d'une chaine de bits.

Dans l'exemple de la figure 1, le dispositif électronique de traitement 10 comprend une unité de traitement d'informations 20 formée par exemple d'une mémoire 22 et d'un processeur 24 associé à la mémoire 22. Il comprend en outre dans cet exemple des moyens d'entrée/sortie 26 et éventuellement un écran d'affichage 28.

Dans l'exemple de la figure 1, le module d'acquisition 12, le module de calcul 14 et le module de transmission 16 sont réalisés chacun sous forme d'un logiciel, ou d'une brique logicielle, exécutable par le processeur 24. La mémoire 22 de l'unité de traitement d'informations 20 est alors apte à stocker un logiciel d'acquisition configuré pour acquérir la donnée D, un logiciel de calcul configuré pour calculer la quantité cryptographique S relative à la donnée acquise D et un logiciel de transmission configuré pour transmettre, à destination du dispositif électronique récepteur, la quantité cryptographique calculée S. Le processeur 24 de l'unité de traitement d'informations 20 est alors apte à exécuter le logiciel d'acquisition, le logiciel de calcul et le logiciel de transmission.

En variante non représentée, le module d'acquisition, le module de calcul et le module de transmission sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*).

Lorsque le dispositif électronique de traitement 10 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module d'acquisition 12 est configuré pour acquérir la donnée D, et est par exemple configuré pour recevoir la donnée D de la part des moyens d'entrée/sortie 26. Les moyens d'entrée/sortie 26 comportent par exemple un clavier ou encore un lecteur de support informatique. En variante, le module d'acquisition 12 est configuré pour acquérir la donnée D via un récepteur de données, apte à recevoir la donnée D de la part d'un autre équipement électronique, non représenté.

Le module électronique de calcul 14 est configuré pour calculer la quantité cryptographique S relative à la donnée D via un algorithme cryptographique, l'algorithme cryptographique comportant la mise en oeuvre d'une fonction produit PROD configurée pour effectuer le produit de deux termes A, B sur un corps fini de Galois à $2^T$ éléments via des multiplications sans retenue successives, T étant un nombre entier supérieur ou égal à 8.

L'algorithme cryptographique comporte de préférence l'application d'une fonction d'exponentiation d'ordre N à une variable Y, N étant un nombre entier, avec N ≥ 2.

L'algorithme cryptographique est typiquement un algorithme de chiffrement par blocs, tel que l'algorithme AES, l'algorithme 3-Way, l'algorithme Kalyna, l'algorithme Kuznyechik, PRESENT, l'algorithme SAFER, l'algorithme SHARK et l'algorithme Square.

La fonction d'exponentiation d'ordre N est alors typiquement utilisée au sein d'une boite de substitution, également appelée boite S (de l'anglais *S-box* pour *Subsitution-box*), destinée à être appliquée à la variable Y.

Lorsque l'algorithme cryptographique est un algorithme de chiffrement par blocs, la variable Y correspond typiquement à un bloc respectif de la donnée acquise D, c'est-à-dire à une partie de taille prédéfinie de ladite donnée D. La taille de chaque bloc, i.e. de chaque partie, est typiquement un multiple de 8 bits. Autrement dit, chaque bloc correspond à un ou plusieurs octets.

En complément facultatif, la fonction d'exponentiation d'ordre N appliquée à la variable Y est au moins partiellement, et de préférence totalement, réalisée via la ou les mises en oeuvre successives de la fonction produit PROD, chaque terme à multiplier dépendant alors de la variable Y ou du résultat d'une mise en oeuvre précédente de la fonction produit PROD.

Selon ce complément facultatif, une fonction SQUA associant à la variable Y le carré de cette variable Y, i.e. cette variable à la puissance 2, est alors calculée de la manière suivante :

[Math 1]

$$Y^2 = SQUA\,(Y) = PROD\,(Y,Y)$$

où PROD représente la fonction produit, et
SQUA représente le carré, i.e. exponentiation à la puissance 2, de la variable Y.

Selon ce complément facultatif, l'exponentiation à la puissance 4 de la variable Y est alors typiquement calculée de la manière suivante :

[Math 2]

$$Y^4 = SQUA\,(SQUA(Y))$$

Selon ce complément facultatif, l'exponentiation à la puissance 254 de la variable Y est par exemple calculée de la manière suivante :

[Math 3]

$$Y^{254} = (((Y^4)^5)^5)^5 \cdot Y^4$$

où l'exponentiation à la puissance 4 de la variable Y, notée $Y^4$, est typiquement calculée à l'aide de l'équation (2) précédente.

La mise en oeuvre de la fonction produit PROD comporte une première multiplication sans retenue des deux termes A, B. La première multiplication sans retenue des deux termes A, B vérifie typiquement l'équation suivante :

[Math 4]

$$A * B = C_0 + X^T \cdot C_1$$

où A et B représentent les deux termes, chacun des termes A, B étant défini sur le corps fini de Galois à $2^T$ éléments, T étant un nombre entier supérieur ou égal à 8, T étant typiquement un multiple de 8,
\* représente l'opération de multiplication sans retenue,
A\*B représente le produit de la première multiplication sans retenue,
$C_0$ représente une partie de poids faible du produit A\*B de la première multiplication sans retenue, et
$C_1$ représente une partie de poids fort du produit A\*B de la première multiplication sans retenue.

L'homme du métier comprendra que le nombre T correspond typiquement à la taille du bloc utilisé dans l'algorithme de chiffrement par blocs.

Les deux termes A, B s'écrivent typiquement sous forme de polynômes de degré inférieur à T, vérifiant alors les équations suivantes :

[Math 5]

$$A = \sum_{j=0}^{T-1} \alpha_j \cdot X^j$$

avec $\alpha_j \in \{0 ; 1\}$ pour $j \in [0 ; T-1]$

[Math 6]

$$B = \sum_{j=0}^{T-1} \beta_j \cdot X^j$$

avec $\beta_j \in \{0 ; 1\}$ pour $j \in [0 ; T-1]$.

L'ensemble des coefficients $\alpha_j$ du polynôme représentant le terme A correspond alors à un mot de T bits, et de manière analogue l'ensemble des coefficients $\beta_j$ du polynôme représentant le terme B correspond alors à un mot de T bits.

L'homme du métier observera alors que le produit A*B de la première multiplication sans retenue est un polynôme de degré au plus égal à (2T-2), que la partie de poids faible $C_0$ du produit A*B est un polynôme de degré inférieur à T, et que la partie de poids fort $C_1$ du produit A*B est un polynôme de degré inférieur à (T-1).

La mise en oeuvre de la fonction produit PROD comporte ensuite un décalage de bit(s) pour la partie de poids fort $C_1$ du produit A*B de la première multiplication sans retenue.

Le décalage de bit(s) pour la partie de poids fort $C_1$ du produit A*B de la première multiplication sans retenue est par exemple un décalage d'un bit à gauche. L'homme du métier comprendra alors que ce décalage d'un bit à gauche correspond à une multiplication par X du polynôme représentant la partie de poids fort $C_1$ du produit A*B de la première multiplication sans retenue.

La mise en oeuvre de la fonction produit PROD comporte ensuite une deuxième multiplication sans retenue d'un résultat C dudit décalage avec un premier terme prédéfini U, le premier terme prédéfini U dépendant d'un polynôme irréductible P de degré T associé au corps fini de Galois.

La deuxième multiplication sans retenue du résultat C et du premier terme prédéfini U vérifie typiquement l'équation suivante :

[Math 7]

$$C * U = Q_0 + X^T \cdot Q_1$$

où C représente le résultat du décalage de bit(s) pour la partie de poids fort $C_1$ du produit A*B de la première multiplication sans retenue,

U représente le premier terme prédéfini,

* représente l'opération de multiplication sans retenue,

C*U représente le produit de la deuxième multiplication sans retenue,

$Q_0$ représente une partie de poids faible du produit C*U de la deuxième multiplication sans retenue, et

$Q_1$ représente une partie de poids fort du produit C*U de la deuxième multiplication sans retenue.

L'homme du métier observera alors également que le produit C*U de la deuxième multiplication sans retenue est un polynôme de degré au plus égal à (2T-2), que la partie de poids faible $Q_0$ du produit C*U est un polynôme de degré inférieur à T, et que la partie de poids fort $Q_1$ du produit C*U est un polynôme de degré inférieur à (T-1).

La mise en oeuvre de la fonction produit PROD comporte ensuite une troisième multiplication sans retenue de la partie de poids fort $Q_1$ du produit C*U de la deuxième multiplication sans retenue avec un deuxième terme prédéfini M, le deuxième terme prédéfini M dépendant d'un polynôme irréductible P de degré T associé au corps fini de Galois.

La troisième multiplication sans retenue de la partie de poids fort $Q_1$ du produit C*U de la deuxième multiplication sans retenue et du deuxième terme prédéfini M vérifie typiquement l'équation suivante :

[Math 8]

$$Q_1 * M = V_0 + X^T \cdot V_1$$

où $Q_1$ représente la partie de poids fort du produit C*U de la deuxième multiplication sans retenue,

M représente le deuxième terme prédéfini,

\* représente l'opération de multiplication sans retenue,

$Q_1$*M représente le produit de la troisième multiplication sans retenue,

$V_0$ représente une partie de poids faible du produit $Q_1$*M de la troisième multiplication sans retenue, et

$V_1$ représente une partie de poids fort du produit $Q_1$*M de la troisième multiplication sans retenue.

L'homme du métier observera alors aussi que le produit $Q_1$*M de la troisième multiplication sans retenue est un polynôme de degré au plus égal à (2T-2), que la partie de poids faible $V_0$ du produit $Q_1$*M est un polynôme de degré inférieur à T, et que la partie de poids fort $V_1$ du produit $Q_1$*M est un polynôme de degré inférieur à (T-1).

Un produit R des deux termes A, B résultant de la mise en oeuvre de la fonction produit PROD est alors obtenu en appliquant l'opérateur OU exclusif, également appelé XOR (de l'anglais *eXclusive OR*), entre la partie de poids faible $C_0$ du produit A*B de la première multiplication sans retenue et la partie de poids faible $V_0$ du produit $Q_1$*M de la troisième multiplication sans retenue.

Le produit R des deux termes A, B, suite à la mise en oeuvre de la fonction produit PROD, vérifie alors typiquement l'équation suivante :

[Math 9]

$$R = PROD(A, B) = C_0 \oplus V_0$$

où R représente le résultat de la fonction produit PROD appliquée aux termes A, B,

$C_0$ représente la partie de poids faible du produit A*B de la première multiplication sans retenue,

$V_0$ représente la partie de poids faible du produit $Q_1$*M de la troisième multiplication sans retenue, et

$\oplus$ représente l'opérateur OU exclusif.

Le produit R est alors un polynôme de degré inférieur à T, et représente un mot de T bits.

Chacune des première, deuxième et troisième multiplications sans retenue est représentée de manière générale par le symbole « * ». Chacune des première, deuxième et troisième multiplications sans retenue est typiquement effectuée en utilisant directement une instruction dédiée d'un processeur, telle que l'instruction CLMUL d'un jeu d'instructions Intel® 64 bits ou encore l'instruction PLMUL d'un jeu d'instructions ARM 64 bits.

Lorsque le décalage de bit(s) pour la partie de poids fort $C_1$ du produit A*B de la première multiplication sans retenue est un décalage d'un bit à gauche, le premier terme prédéfini U est par exemple déterminé en fonction de coefficients d'un polynôme complémentaire inverse T de degré T-2 qui représente l'inverse d'un polynôme complémentaire P* modulo $X^{T-1}$, le polynôme complémentaire P* étant le complémentaire du polynôme irréductible P de degré T.

Dans cet exemple, en écrivant le polynôme irréductible P de degré T associé au corps fini de Galois de la manière suivante :

[Math 10]

$$P = \sum_{j=0}^{T} a_j \cdot X^j$$

avec $a_j \in \{0 ; 1\}$ pour $j \in [0 ; T-1]$, $a_T = 1$ ;

le polynôme complémentaire P* s'écrit de la manière suivante :

[Math 11]

$$P^* = \sum_{j=0}^{T} a_{T-j} \cdot X^j$$

Dans cet exemple, en écrivant le polynôme complémentaire inverse T de degré T-2 représentant l'inverse modulo $X^{T-1}$ du polynôme complémentaire P* de la manière suivante :

[Math 12]

$$T = \sum_{j=0}^{T-2} b_j \cdot X^j$$

avec $b_j \in \{0 \ ; 1\}$ pour $j \in [0 \ ; \text{T-2}]$ ;
le premier terme prédéfini U vérifie alors par exemple l'équation suivante :

[Math 13]

$$U = \sum_{j=1}^{T-1} b_{T-j-1} \cdot X^j$$

avec $b_{T-j-1} \in \{0 \ ; 1\}$ pour $j \in [1 \ ; \text{T-1}]$.

Lorsque le décalage de bit(s) pour la partie de poids fort $C_1$ du produit A*B de la première multiplication sans retenue est un décalage d'un bit à gauche, le deuxième terme prédéfini M est par exemple déterminé en fonction des coefficients de degré 0 à (T-1) du polynôme irréductible P de degré T.
Dans cet exemple, en écrivant le polynôme irréductible P de degré T selon l'équation (10) précédente, le deuxième terme prédéfini M vérifie alors par exemple l'équation suivante :

[Math 14]

$$M = \sum_{j=0}^{T-1} a_j \cdot X^j$$

avec $a_j \in \{0 \ ; 1\}$ pour $j \in [0 \ ; \text{T-1}]$.
En complément facultatif, chaque terme A, B à multiplier par la fonction produit PROD est la concaténation de K sous-termes, K étant un nombre entier supérieur ou égal à 2.
Selon ce complément facultatif, les deux termes à multiplier A, B s'écrivent typiquement de la façon suivante :

[Math 15]

$$A = \sum_{i=1}^{K} A_i \cdot X^{\theta_i \cdot T}$$

[Math 16]

$$B = \sum_{i=1}^{K} B_i \cdot X^{\theta_i \cdot T}$$

où A et B représentent les deux termes à multiplier,
$A_i$ et $B_i$ représentent les sous-termes respectifs de ces deux termes, et
$\theta_i$ représentent des coefficients prédéfinis, avec $\theta_1 = 0$, $\theta_{i+1} = 2. \theta_i + 2$, et i indice entier compris entre 1 et K.

La fonction produit PROD s'applique alors de la même façon aux termes A, B, via par exemple la mise en oeuvre des équations (4), (7) et (8) précédentes, et le produit R des deux termes A, B vérifie alors typiquement l'équation (9) précédente.

Selon ce complément facultatif, chacun des produits $A_i.B_i$ de sous-termes $A_i$, $B_i$ vérifie alors par exemple l'équation suivante :

[Math 17]

$$R_i = A_i \cdot B_i = \left( R \; div \; X^{2 \cdot \theta_i \cdot T} \right) mod \; X^T$$

où $R_i$ représente le produit $A_i.B_i$ des sous-termes $A_i$, $B_i$ ;
R représente le résultat de l'application de l'opérateur OU exclusif entre la partie de poids faible $C_0$ du produit A*B de la première multiplication sans retenue et la partie de poids faible $V_0$ du produit $Q_1$*M de la troisième multiplication sans retenue, suite à la mise en oeuvre de la fonction produit PROD pour les deux termes à multiplier A, B ; i.e. R vérifie l'équation (9) précédente ;
div représente l'opérateur division sur le corps fini de Galois ; et
mod représente l'opérateur modulo sur le corps fini de Galois.

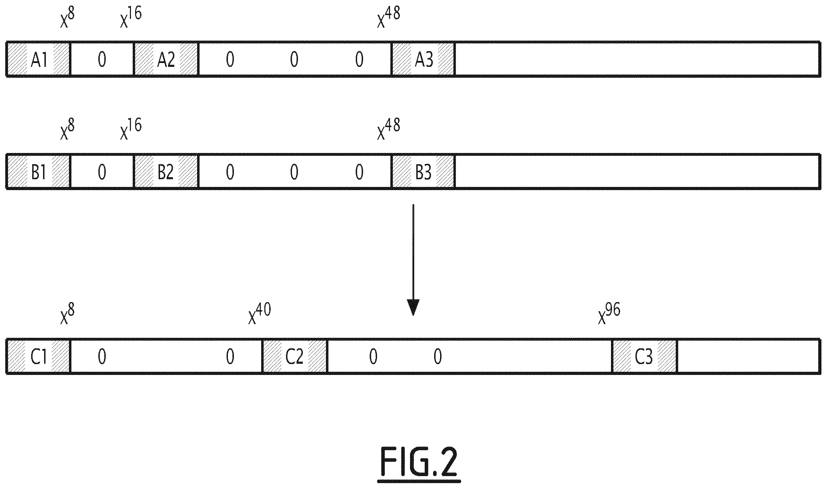

Cette multiplication des termes A, B décomposés en K sous-termes $A_i$, $B_i$ est représentée à la figure 2 pour K égal à 3 et T égal à 8, étant observé que les sous-termes $A_i$ $B_i$ sont notés Ai, Bi sur la figure 2 et que le produit $A_i.B_i$ de 2 sous-termes $A_i$, $B_i$ est noté Ci sur cette figure 2, ceci par simplification des dessins. Autrement dit, chaque élément Ci de la figure 2 correspond au terme $R_i$ de l'équation (17) précédente.

En complément facultatif encore, l'algorithme cryptographique comporte la mise en oeuvre d'une technique de masquage contre une attaque par analyse différentielle de consommation, également appelée attaque DPA (de l'anglais *Differential Power Analysis*).

La technique de masquage est par exemple la technique de Trichina ou la technique d'Ishai, chacune étant connue en soi. La technique de masquage inclut une décomposition de chacun des deux termes A, B respectifs à multiplier, en plusieurs sous-termes notés $A_{Ma\_i}$ et $B_{Ma\_i}$.

L'homme du métier observera que la notation utilisée pour les sous-termes $A_{Ma\_i}$, $B_{Ma\_i}$ respectifs des deux termes A, B dans le contexte de la technique de masquage diffère de celle utilisée pour la concaténation du complément facultatif précédent, les décompositions des termes A, B en sous-termes respectifs n'étant pas nécessairement identiques pour la technique de masquage et pour ladite concaténation. Ces décompositions des termes A, B en sous-termes respectifs sont d'ailleurs généralement différentes entre la technique de masquage et ladite concaténation.

Selon ce complément facultatif encore, les deux termes à multiplier A, B s'écrivent typiquement de la façon suivante :

[Math 18]

$$A = \sum_{i=1}^{L} A_{Ma\_i}$$

[Math 19]

$$B = \sum_{i=1}^{L} B_{Ma\_i}$$

où A et B représentent les deux termes à multiplier,
$A_{Ma\_i}$ et $B_{Ma\_i}$ représentent les sous-termes respectifs de ces deux termes, et
L représente le nombre de sous-termes, L étant typiquement égal à 2.

La technique de masquage inclut ensuite des multiplications terme à terme desdits sous-termes $A_{Ma\_i}$, $B_{Ma\_i}$, les termes A et B étant par exemple multipliés entre eux selon l'équation suivante :

[Math 20]

$$C_2 + Rand = \left(\sum_{i=1}^{L} A_{Ma\_i}\right) \cdot \left(\sum_{j=1}^{L} B_{Ma\_j}\right)$$

où $C_2$ représente le résultat de cette multiplication des termes A, B, et

Rand représente un aléa, et

les termes A et B sont décomposés selon les équations (18) et (19) précédentes.

L'homme du métier observera alors que l'équation (20) s'écrit aussi de la manière suivante, étant donné que 2 fois Rand est égal à 0 sur le corps fini de Galois à $2^T$ éléments :

[Math 21]

$$C_2 = Rand + \sum_{i=1}^{L}\sum_{j=1}^{L} A_{Ma\_i} \cdot B_{Ma\_j}$$

Selon ce complément facultatif, au moins une multiplication terme à terme est alors effectuée via la mise en oeuvre de la fonction produit PROD. Chaque multiplication terme à terme desdits sous-termes $A_{Ma\_i}$, $B_{Ma\_i}$ est de préférence effectuée via la mise en oeuvre de la fonction produit PROD.

Selon ce complément facultatif, les termes A et B sont alors par exemple calculés de la manière suivante :

[Math 22]

$$C_2 = Rand + \sum_{i=1}^{L}\sum_{j=1}^{L} PROD(A_{Ma\_i}, B_{Ma\_j})$$

où Rand représente l'aléa, et

PROD représente la fonction produit.

Selon ce complément facultatif, la fonction SQUA de la variable Y, i.e. l'exponentiation à la puissance 2 de cette variable Y, est alors calculée à l'aide de l'équation (22) où chacun des termes A, B est égal à la variable Y.

Selon ce complément facultatif et plus généralement, l'exponentiation de la variable Y à n'importe quelle puissance est calculée à l'aide de l'équation (22) où chacun des termes A, B est égal à la variable Y ou bien au résultat d'une exponentiation précédente de puissance inférieure.

Après le calcul de la quantité cryptographique calculée S par le module de calcul 14, le module de transmission 16 est configuré pour transmettre la quantité cryptographique calculée S à destination du dispositif électronique récepteur, non représenté. Le module de transmission 16 est par exemple relié à un émetteur, tel qu'un émetteur radioélectrique, aux fins de cette transmission.

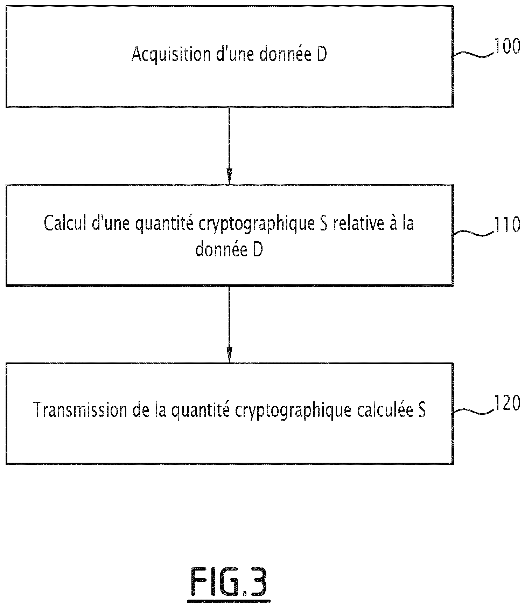

Le fonctionnement du dispositif électronique de traitement 10 selon l'invention va désormais être expliqué à l'aide de la figure 3 représentant un organigramme d'un procédé, selon l'invention, de traitement de la donnée D.

Lors d'une étape initiale 100, le dispositif de traitement 10 acquiert, via son module d'acquisition 12, la donnée D, qui a été par exemple préalablement reçue via les moyens d'entrée/sortie 26.

Le dispositif de traitement 10 calcule ensuite, lors de l'étape 110 et via son module de calcul 14, la quantité cryptographique S relative à la donnée acquise D.

La quantité cryptographique calculée S est une signature électronique de la donnée D ou bien le chiffré de ladite donnée D.

Le calcul de la quantité cryptographique S relative à la donnée D est effectué via l'application de l'algorithme cryptographique, tel que décrit précédemment, notamment via la mise en oeuvre de la fonction produit PROD.

Le dispositif de traitement 10 transmet enfin, lors de l'étape 120 et via son module de transmission 16, la quantité cryptographique S calculée lors de l'étape 110, au dispositif électronique récepteur, non représenté.

Ainsi, le module électronique de calcul 14 et le procédé de calcul selon l'invention permettent alors d'obtenir efficacement la quantité cryptographique S via la mise en oeuvre de la fonction produit PROD qui est effectuée uniquement avec des multiplications sans retenue, un décalage de bit(s) et une opération OU exclusif.

La fonction produit PROD est alors avantageuse en termes d'opération à effectuer et de temps de calcul, notamment pour la mise en oeuvre en outre de la technique de masquage contre des attaques DPA.

En outre, les multiplications sans retenue de la fonction produit PROD sont typiquement effectuées en utilisant directement des instructions dédiées d'un processeur, telles que l'instruction CLMUL d'un jeu d'instructions Intel® 64 bits ou encore l'instruction PLMUL d'un jeu d'instructions ARM 64 bits.

On conçoit ainsi que le dispositif de traitement 10 et le procédé de traitement selon l'invention permettent alors, de par le module de calcul 14 et le procédé associé de calcul de la quantité cryptographique S, d'être plus efficaces, notamment en proposant une multiplication optimisée avec la fonction produit PROD.

L'homme du métier comprendra également que l'invention est particulièrement utile dans le domaine des systèmes de communication sécurisés, tels que les systèmes de radio-transmission sécurisés, les systèmes de téléphonie sécurisés, ou encore les systèmes de communication par satellite.

**Revendications**

**1.** Procédé de calcul d'une quantité cryptographique (S) relative à une donnée (D), le procédé étant mis en oeuvre par un module électronique de calcul (14) et comprenant :

- le calcul (110) de la quantité cryptographique (S) relative à la donnée (D) via un algorithme cryptographique, l'algorithme cryptographique comportant la mise en oeuvre d'une fonction produit (PROD) configurée pour effectuer le produit de deux termes (A, B) sur un corps fini de Galois à $2^T$ éléments via des multiplications sans retenue successives, T étant un nombre entier supérieur ou égal à 8,
**caractérisé en ce que** la mise en oeuvre de la fonction produit (PROD) comporte :

  + première multiplication sans retenue des deux termes (A, B),
  + décalage de bit(s) pour une partie de poids fort ($C_1$) du produit (A*B) de la première multiplication sans retenue,
  + deuxième multiplication sans retenue du résultat (C) dudit décalage avec un premier terme prédéfini (U), le premier terme prédéfini (U) dépendant d'un polynôme irréductible (P) de degré T associé au corps fini de Galois,
  + troisième multiplication sans retenue d'une partie de poids fort ($Q_1$) du produit (C*U) de la deuxième multiplication sans retenue avec un deuxième terme prédéfini (M), le deuxième terme prédéfini (M) dépendant du polynôme irréductible (P) de degré T associé au corps fini de Galois, et
  + obtention du produit des deux termes (A, B) via l'application de l'opérateur OU exclusif entre une partie de poids faible ($C_0$) du produit (A*B) de la première multiplication sans retenue et une partie de poids faible ($V_0$) du produit ($Q_1$*M) de la troisième multiplication sans retenue,

le polynôme irréductible (P) de degré T associé au corps fini de Galois s'écrivant de la manière suivante :

$$P = \sum_{j=0}^{T} a_j \cdot X^j$$

avec $a_j \in \{0 ; 1\}$ pour $j \in [0 ; T-1]$, $a_T = 1$ ;
un polynôme complémentaire (P*) s'écrivant de la manière suivante :

$$P^* = \sum_{j=0}^{T} a_{T-j} \cdot X^j$$

un polynôme complémentaire inverse (T) de degré T-2 et représentant l'inverse du polynôme complémentaire (P*) modulo $X^{T-1}$ s'écrivant de la manière suivante :

$$T = \sum_{j=0}^{T-2} b_j \cdot X^j$$

avec $b_j \in \{0 \, ; \, 1\}$ pour $j \in [0 \, ; \, T\text{-}2]$
le premier terme prédéfini (U) vérifiant :

$$U = \sum_{j=1}^{T-1} b_{T-j-1} \cdot X^j$$

le deuxième terme prédéfini (M) vérifiant :

$$M = \sum_{j=0}^{T-1} a_j \cdot X^j$$

le décalage de bit(s) pour la partie de poids fort ($C_1$) du produit (A*B) de la première multiplication sans retenue étant un décalage d'un bit à gauche.

2. Procédé de calcul selon la revendication 1, dans lequel chaque terme (A, B) à multiplier par la fonction produit (PROD) est la concaténation de K sous-termes, K étant un nombre entier supérieur ou égal à 2,

les deux termes à multiplier (A, B) s'écrivant de la façon suivante :

$$A = \sum_{i=1}^{K} A_i \cdot X^{\theta_i \cdot T}$$

$$B = \sum_{i=1}^{K} B_i \cdot X^{\theta_i \cdot T}$$

où A et B représentent les deux termes à multiplier,
$A_i$ et $B_i$ représentent les sous-termes respectifs de ces deux termes, et
$\theta_i$ représentent des coefficients prédéfinis, avec i indice entier compris entre 1 et K, avec $\theta_1 = 0$, $\theta_{i+1} = 2 . \theta_i + 2$ ;
les produits ($A_i.B_i$) des sous-termes ($A_i$, $B_i$) vérifiant alors :

$$R_i = A_i \cdot B_i = \left( R \ div \ X^{2 \cdot \theta_i \cdot T} \right) mod \ X^T$$

où R représente le résultat de l'application de l'opérateur OU exclusif entre la partie de poids faible ($C_0$) du produit (A*B) de la première multiplication sans retenue et la partie de poids faible ($V_0$) du produit ($Q_1$*M) de la troisième multiplication sans retenue, suite à la mise en oeuvre de la fonction produit (PROD) pour les deux termes à multiplier (A, B),
div représente l'opérateur division sur le corps fini de Galois, et
mod représente l'opérateur modulo sur le corps fini de Galois.

3. Procédé de calcul selon l'une quelconque des revendications précédentes, dans lequel l'algorithme cryptographique comporte l'application d'une fonction d'exponentiation d'ordre N à une variable (Y), N étant un nombre entier supérieur ou égal à 2, via la ou les mises en oeuvre successives de la fonction produit (PROD), chaque terme à multiplier dépendant alors de la variable (Y) ou du résultat d'une mise en oeuvre précédente de la fonction produit (PROD) ;
l'algorithme cryptographique étant de préférence l'algorithme AES.

**4.** Procédé de calcul selon l'une quelconque des revendications précédentes, dans lequel l'algorithme cryptographique comporte la mise en oeuvre d'une technique de masquage contre une attaque par analyse différentielle de consommation (DPA), la technique de masquage incluant une décomposition en multiples sous-termes de chacun de deux termes (A, B) respectifs à multiplier, puis des multiplications terme à terme desdits sous-termes, au moins une multiplication terme à terme étant effectuée via la mise en oeuvre de la fonction produit (PROD) ;

chaque multiplication terme à terme étant de préférence effectuée via la mise en oeuvre de la fonction produit (PROD) ;
la technique de masquage étant de préférence encore la technique de Trichina ou la technique d'Ishai.

**5.** Procédé de traitement d'une donnée (D), le procédé étant mis en oeuvre par un dispositif électronique de traitement (10) et comprenant :

- l'acquisition (100) de la donnée (D) ;
- le calcul (110) d'une quantité cryptographique (S) relative à la donnée acquise (D) via un procédé de calcul selon l'une quelconque des revendications précédentes ; et
- la transmission (120), à destination d'un dispositif électronique récepteur, de la quantité cryptographique calculée (S).

**6.** Programme d'ordinateur comportant des instructions logicielles qui, lorsqu'elles sont exécutées par un ordinateur, mettent en oeuvre un procédé selon l'une quelconque des revendications précédentes.

**7.** Module électronique (14) de calcul d'une quantité cryptographique (S) relative à une donnée (D), le module électronique de calcul (14) étant configuré pour calculer la quantité cryptographique (S) relative à la donnée (D) via un algorithme cryptographique, l'algorithme cryptographique comportant la mise en oeuvre d'une fonction produit (PROD) configurée pour effectuer le produit de deux termes (A, B) sur un corps fini de Galois à $2^T$ éléments via des multiplications sans retenue successives, T étant un nombre entier supérieur ou égal à 8,

**caractérisé en ce que** la mise en oeuvre de la fonction produit (PROD) comporte :

+ première multiplication sans retenue des deux termes (A, B),
+ décalage de bit(s) pour une partie de poids fort ($C_1$) du produit (A*B) de la première multiplication sans retenue,
+ deuxième multiplication sans retenue du résultat (C) dudit décalage avec un premier terme prédéfini (U), le premier terme prédéfini (U) dépendant d'un polynôme irréductible (P) de degré T associé au corps fini de Galois,
+ troisième multiplication sans retenue d'une partie de poids fort ($Q_1$) du produit (C*U) de la deuxième multiplication sans retenue avec un deuxième terme prédéfini (M), le deuxième terme prédéfini (M) dépendant du polynôme irréductible (P) de degré T associé au corps fini de Galois, et
+ obtention du produit des deux termes (A, B) via l'application de l'opérateur OU exclusif entre une partie de poids faible ($C_0$) du produit (A*B) de la première multiplication sans retenue et une partie de poids faible ($V_0$) du produit ($Q_1$*M) de la troisième multiplication sans retenue,

le polynôme irréductible (P) de degré T associé au corps fini de Galois s'écrivant de la manière suivante :

$$P = \sum_{j=0}^{T} a_j \cdot X^j$$

avec $a_j \in \{0 ; 1\}$ pour $j \in [0 ; T\text{-}1]$, $a_T = 1$ ;
un polynôme complémentaire (P*) s'écrivant de la manière suivante :

$$P^* = \sum_{j=0}^{T} a_{T-j} \cdot X^j$$

un polynôme complémentaire inverse (T) de degré T-2 et représentant l'inverse du polynôme complémentaire (P*) modulo $X^{T-1}$ s'écrivant de la manière suivante :

$$T = \sum_{j=0}^{T-2} b_j \cdot X^j$$

avec $b_j \in \{0 ; 1\}$ pour $j \in [0 ; T-2]$
le premier terme prédéfini (U) vérifiant :

$$U = \sum_{j=1}^{T-1} b_{T-j-1} \cdot X^j$$

le deuxième terme prédéfini (M) vérifiant :

$$M = \sum_{j=0}^{T-1} a_j \cdot X^j$$

le décalage de bit(s) pour la partie de poids fort ($C_1$) du produit (A*B) de la première multiplication sans retenue étant un décalage d'un bit à gauche.

8. Dispositif électronique (10) de traitement d'une donnée (D), le dispositif (10) comprenant :

- un module d'acquisition (12) configuré pour acquérir une donnée (D) ;
- un module de calcul (14) configuré pour calculer une quantité cryptographique (S) relative à la donnée acquise (D) ;
- un module de transmission (16) configuré pour transmettre, à destination d'un dispositif électronique récepteur, la quantité cryptographique calculée (S),

**caractérisé en ce que** le module de calcul (14) est selon la revendication précédente.


**Patentansprüche**

1. Berechnungsverfahren einer kryptografischen Größe (S) in Bezug auf ein Datenelement (D), wobei das Verfahren von einem elektronischen Rechenmodul (14) implementiert wird und umfassend:

- die Berechnung (110) der kryptografischen Größe (S) in Bezug auf das Datenelement (D) über einen kryptografischen Algorithmus, der kryptografische Algorithmus umfassend die Implementierung einer Produktfunktion (PROD), die konfiguriert ist, um das Produkt von zwei Datenelementen (A, B) über einen endlichen Galois-Körper mit $2^T$ Elementen über aufeinanderfolgende Multiplikationen ohne Übertrag auszuführen, wobei T eine ganze Zahl größer als oder gleich wie 8 ist,
**dadurch gekennzeichnet, dass** die Implementierung der Produktfunktion (PROD) Folgendes umfasst:

+ erste Multiplikation ohne Übertrag der zwei Elemente (A, B),
+ Bitverschiebung(en) für einen höherwertigen Teil ($C_1$) des Produkts (A*B) der ersten Multiplikation ohne Übertrag,
+ zweite Multiplikation ohne Übertrag des Resultats (C) der Verschiebung mit einem ersten vordefinierten Element (U), wobei das erste vordefinierte Element (U) von einem irreduziblen Polynom (P) von Grad T abhängt, das mit dem endlichen Galois-Körper assoziiert ist,
+ dritte Multiplikation ohne Übertrag eines höherwertigen Teils ($Q_1$) des Produkts (C*U) der zweiten Multiplikation ohne Übertrag mit einem zweiten vorbestimmten Element (M), wobei das zweite vordefinierte Element (M) von dem irreduziblen Polynom (P) von Grad T abhängt, das mit dem endlichen Galois-Körper assoziiert ist, und

+ Erlangen des Produkts der zwei Elemente (A, B) über die Anwendung des Operators ODER ausschließlich zwischen einem niedrigstwertigen Teil ($C_0$) des Produkts (A*B) der ersten Multiplikation ohne Übertrag und einem niedrigstwertigen Teil ($V_0$) des Produkts ($Q_1$*M) der dritten Multiplikation ohne Übertrag,

das irreduzible Polynom (P) von Grad T, das mit dem endlichen Galois-Körper assoziiert ist, der wie folgt geschrieben wird:

$$P = \sum_{j=0}^{T} a_j \cdot X^j$$

wobei $a_j \in \{0; 1\}$ für $j \in [0; T\text{-}1]$, $a_T = 1$;

ein komplementäres Polynom (P*), das wie folgt geschrieben wird:

$$P^* = \sum_{j=0}^{T} a_{T-j} \cdot X^j$$

ein inverses komplementäres Polynom (T) von Grad T-2, und das die Inverse des komplementären Polynoms (P*) Modulo $X^{T-1}$ darstellt, das wie folgt geschrieben wird:

$$T = \sum_{j=0}^{T-2} b_j \cdot X^j$$

wobei $b_j \in \{0; 1\}$ für $j \in [0; T\text{-}2]$

das erste vordefinierte Element (U), das Folgendes verifiziert:

$$U = \sum_{j=1}^{T-1} b_{T-j-1} \cdot X^j$$

das zweite vordefinierte Element (M), das Folgendes verifiziert:

$$M = \sum_{j=0}^{T-1} a_j \cdot X^j$$

wobei die Bitverschiebung(en) für den höherwertigen Teil ($C_1$) des Produkts (A*B) der ersten Multiplikation ohne Übertrag eine Verschiebung um ein Bit nach links ist/sind.

2. Berechnungsverfahren nach Anspruch 1, wobei jedes Element (A, B), das mit der Produktfunktion (PROD) multipliziert werden soll, die Verkettung von K Unterelementen ist, wobei K eine ganze Zahl größer als oder gleich wie 2 ist,

wobei die zwei zu multiplizierenden Elemente (A, B) wie folgt geschrieben werden:

$$A = \sum_{i=1}^{K} A_i \cdot X^{\theta_i \cdot T}$$

$$B = \sum_{i=1}^{K} B_i \cdot X^{\theta_i \cdot T}$$

wobei A und B die zwei zu multiplizierenden Elemente darstellen,

$A_i$ und $B_i$ die jeweiligen Unterelemente dieser zwei Elemente darstellen und

$\theta_i$ vordefinierte Koeffizienten darstellen, wobei i ein ganzzahliger Index zwischen 1 und K ist, wobei $\theta_1 = 0$, $\theta_{i+1}$ = 2. $\theta_i$ + 2;

wobei die Produkte ($A_i.B_i$) der Unterelemente ($A_i$, $B_i$) dann Folgendes verifizieren:

$$R_i = A_i \cdot B_i = \left( R\ div\ X^{2 \cdot \theta_i \cdot T} \right) mod\ X^T$$

wobei R das Resultat der Anwendung des Operators ODER ausschließlich zwischen einem niedrigstwertigen Teil ($C_0$) des Produkts (A*B) der ersten Multiplikation ohne Übertrag und einem niedrigstwertigen Teil ($V_0$) des Produkts ($Q_1$*M) der dritten Multiplikation ohne Übertrag nach Implementieren der Produktfunktion (PROD) für die zwei zu multiplizierenden Elemente (A, B) ist,

div den Divisionsoperator über den endlichen Galois-Körper darstellt, und

mod Modulo-Operator über den endlichen Galois-Körper darstellt.

3. Berechnungsverfahren nach einem der vorherigen Ansprüche, wobei der kryptografische Algorithmus die Anwendung einer Exponentiationsfunktion der Ordnung N auf eine Variable (Y) umfasst, wobei N eine ganze Zahl größer als oder gleich wie 2 ist, über die aufeinanderfolgende(n) Implementierungen der Produktfunktion (PROD), wobei jedes zu multiplizierende Element dann von der Variablen (Y) oder von dem Resultat einer vorherigen Implementierung der Produktfunktion (PROD) abhängt;

wobei der kryptografische Algorithmus vorzugsweise der AES-Algorithmus ist.

4. Berechnungsverfahren nach einem der vorherigen Ansprüche, wobei der kryptographische Algorithmus die Implementierung einer Maskierungstechnik gegen einen Angriff durch differenzielle Leistungsanalyse (DPA) umfasst, wobei die Maskierungstechnik eine Aufspaltung jedes der zwei Elemente (A, B) in mehrere zu multiplizierende Unterelemente und dann Element-zu-Element-Multiplikationen der Unterelemente umfasst, wobei mindestens eine Element-zu-Element-Multiplikation über die Implementierung der Produktfunktion (PROD) durchgeführt wird;

wobei jede Element-zu-Element-Multiplikation vorzugsweise über die Implementierung der Produktfunktion (PROD) durchgeführt wird;

wobei die Maskierungstechnik vorzugsweise noch die Trichina-Technik oder die Ishai-Technik ist.

5. Verarbeitungsverfahren eines Datenelements (D), wobei das Verfahren von einer elektronischen Verarbeitungsvorrichtung (10) implementiert wird und umfassend:

- die Erfassung (100) des Datenelements (D);
- Berechnen (110) einer kryptografischen Größe (S), die sich auf das erfasste Datenelement (D) bezieht, über ein Berechnungsverfahren nach einem der vorherigen Ansprüche; und
- Übertragen (120) der berechneten kryptografischen Menge (S) mit Ziel einer empfangenden elektronischen Vorrichtung.

6. Computerprogramm, umfassend Softwareanweisungen, die, wenn sie von einem Computer ausgeführt werden, ein Verfahren nach einem der vorherigen Ansprüche implementieren.

7. Elektronikmodul (14) zum Berechnen einer kryptographischen Größe (S), die sich auf ein Datenelement (D) bezieht, wobei das elektronische Berechnungsmodul (14) konfiguriert ist, um die kryptographische Größe (S) in Bezug auf das Datenelement (D) durch einen Algorithmus zu berechnen, der kryptografische Algorithmus umfassend die Implementierung einer Produktfunktion (PROD), die konfiguriert ist, um das Produkt von zwei Datenelementen (A, B) über einen endlichen Galois-Körper mit $2^T$ Elementen über aufeinanderfolgende Multiplikationen ohne Übertrag auszuführen, wobei T eine ganze Zahl größer als oder gleich wie 8 ist,

**dadurch gekennzeichnet, dass** die Implementierung der Produktfunktion (PROD) Folgendes umfasst:

+ erste Multiplikation ohne Übertrag der zwei Elemente (A, B),
+ Bitverschiebung(en) für einen höherwertigen Teil ($C_1$) des Produkts (A*B) der ersten Multiplikation ohne Übertrag,
+ zweite Multiplikation ohne Übertrag des Resultats (C) der Verschiebung mit einem ersten vordefinierten Element (U), wobei das erste vordefinierte Element (U) von einem irreduziblen Polynom (P) von Grad T abhängt, das mit dem endlichen Galois-Körper assoziiert ist,
+ dritte Multiplikation ohne Übertrag eines höherwertigen Teils ($Q_1$) des Produkts (C*U) der zweiten Multiplikation ohne Übertrag mit einem zweiten vorbestimmten Element (M), wobei das zweite vordefinierte Element (M) von dem irreduziblen Polynom (P) von Grad T abhängt, das mit dem endlichen Galois-Körper assoziiert ist, und
+ Erlangen des Produkts der zwei Elemente (A, B) über die Anwendung des Operators ODER ausschließlich zwischen einem niedrigstwertigen Teil ($C_0$) des Produkts (A*B) der ersten Multiplikation ohne Übertrag und einem niedrigstwertigen Teil ($V_0$) des Produkts ($Q_1$*M) der dritten Multiplikation ohne Übertrag,

das irreduzible Polynom (P) von Grad T, das mit dem endlichen Galois-Körper assoziiert ist, der wie folgt geschrieben wird:

$$P = \sum_{j=0}^{T} a_j \cdot X^j$$

wobei $a_j \in \{0; 1\}$ für $j \in [0; T-1]$, $a_T = 1$;
ein komplementäres Polynom (P*), das wie folgt geschrieben wird:

$$P^* = \sum_{j=0}^{T} a_{T-j} \cdot X^j$$

ein inverses komplementäres Polynom (T) von Grad T-2 und das die Inverse des komplementären Polynoms (P*) Modulo $X^{T-1}$ darstellt, das wie folgt geschrieben wird:

$$T = \sum_{j=0}^{T-2} b_j \cdot X^j$$

wobei $b_j \in \{0; 1\}$ für $j \in [0; T-2]$
das erste vordefinierte Element (U), das Folgendes verifiziert:

$$U = \sum_{j=1}^{T-1} b_{T-j-1} \cdot X^j$$

das zweite vordefinierte Element (M), das Folgendes verifiziert:

$$M = \sum_{j=0}^{T-1} a_j \cdot X^j$$

wobei die Bitverschiebung(en) für den höherwertigen Teil ($C_1$) des Produkts (A*B) der ersten Multiplikation ohne Übertrag eine Verschiebung um ein Bit nach links ist/sind.

8. Elektronische Vorrichtung (10) zur Verarbeitung eines Datenelements (D), die Vorrichtung (10) umfassend:

- ein Erfassungsmodul (12), das zum Erfassen eines Datenelements (D) konfiguriert ist;
- ein Berechnungsmodul (14), das konfiguriert ist, um eine kryptografische Größe (S) in Bezug auf das erfasste Datenelement (D) zu berechnen;
- ein Übertragungsmodul (16), das konfiguriert ist, um die berechnete kryptografische Menge (S) mit Ziel einer empfangenden elektronischen Vorrichtung zu übertragen,

**dadurch gekennzeichnet, dass** das Berechnungsmodul (14) gemäß dem vorherigen Anspruch ist.

**Claims**

1. A method of calculating a cryptographic quantity (S) relating to an item of data (D), the method being implemented by an electronic calculation module (14) and comprising:

- calculation (110) of the cryptographic quantity (S) relating to the data (D) via a cryptographic algorithm, the cryptographic algorithm comprising the implementation of a product function (PROD) configured to find the product of two terms (A, B) over a finite Galois field with $2^T$ elements via successive carry-less multiplications, T being an integer greater than or equal to 8,
**characterised in that** the implementation of the product function (PROD) comprises:

+ first carry-less multiplication of the two terms (A, B),
+ bit shift(s) for a most significant part ($C_1$) of the product (A*B) of the first carry-less multiplication,
+ second carry-less multiplication of the result (C) of said shift with a first predefined term (U), the first predefined term (U) depending on an irreducible polynomial (P) of degree T associated with the finite Galois field,
+ third carry-less multiplication of a most significant part ($Q_1$) of the product (C*U) of the second carry-less multiplication with a second predefined term (M), the second predefined term (M) depending on the irreducible polynomial (P) of degree T associated with the finite Galois field, and
+ finding the product of the two terms (A, B) by applying the exclusive OR operator between a less significant part ($C_0$) of the product (A*B) of the first carry-less multiplication and a less significant part ($V_0$) of the product ($Q_1$*M) of the third carry-less multiplication,

the irreducible polynomial (P) of degree T associated with the finite Galois field being written as follows:

$$P = \sum_{j=0}^{T} a_j \cdot X^j$$

where $a_j \in \{0; 1\}$ for $j \in [0; T-1]$, $a_T = 1$;
a complementary polynomial (P*) being written as follows:

$$P^* = \sum_{j=0}^{T} a_{T-j} \cdot X^j$$

an inverse complementary polynomial (T) of degree T-2, representing the inverse of the complementary polynomial (P*) modulo $X^{T-1}$ written as follows:

$$T = \sum_{j=0}^{T-2} b_j \cdot X^j$$

where $b_j \in \{0; 1\}$ for $j \in [0; T-2]$
the first predefined term (U) satisfying:

$$U = \sum_{j=1}^{T-1} b_{T-j-1} \cdot X^j$$

the second predefined term (M) satisfying:

$$M = \sum_{j=0}^{T-1} a_j \cdot X^j$$

the bit shift(s) for the most significant part ($C_1$) of the product (A*B) of the first carry-free multiplication being a one-bit shift to the left.

2. A method of calculation according to claim 1, wherein each term (A, B) to be multiplied by the product function (PROD) is the concatenation of K subterms, K being an integer greater than or equal to 2.

the two terms to be multiplied (A, B) being written as follows:

$$A = \sum_{i=1}^{K} A_i \cdot X^{\theta_i \cdot T}$$

$$B = \sum_{i=1}^{K} B_i \cdot X^{\theta_i \cdot T}$$

where A and B are the two terms to be multiplied,
$A_i$ and $B_i$ represent the respective sub-terms of these two terms, and
$\theta_i$ are predefined coefficients, with i being an integer between 1 and K, where $\theta_1 = 0$, $\theta_{i+1} = 2. \theta_i + 2$;
the products ($A_i.B_i$) of the subterms ($A_i$, $B_i$) then satisfying:

$$R_i = A_i \cdot B_i = \left( R \; div \; X^{2 \cdot \theta_i \cdot T} \right) mod \; X^T$$

where R is the result of applying the exclusive OR operator between the less significant part ($C_0$) of the product (A*B) of the first carry-less multiplication and the less significant part ($V_0$) of the product ($Q_1$*M) of the third carry-less multiplication, following the implementation of the product function (PROD) for the two terms to be multiplied (A, B),
div represents the division operator on the finite Galois field, and
mod represents the modulo operator on the finite Galois field.

3. A calculation method according to any one of the preceding claims, in which the cryptographic algorithm comprises the application of an exponentiation function of order N to a variable (Y), N being an integer greater than or equal to 2, via the successive implementation(s) of the product function (PROD), each term to be multiplied then depending on the variable (Y) or on the result of a previous implementation of the product function (PROD);
the cryptographic algorithm being preferably the AES algorithm.

4. A calculation method according to any one of the preceding claims, wherein the cryptographic algorithm comprises implementing a masking technique against a differential power analysis (DPA) attack, the masking technique including breaking down each of two respective terms (A, B) to be multiplied into multiple subterms, and then term-by-term multiplications of said subterms, at least one term-by-term multiplication being performed by implementing the product function (PROD);

> each term-by-term multiplication being preferably performed by implementing the product function (PROD);
> the masking technique is preferably still the Trichina technique or the Ishai technique.

5. A method of processing data (D), the method being implemented by an electronic processing device (10) and comprising:

> - acquiring (100) of the data (D);
> - calculating (110) a cryptographic quantity (S) relating to the acquired data via a calculation method as defined according to any one of the preceding claims; and
> - transmitting (120) the calculated cryptographic quantity (S) to a receiving electronic device.

6. A computer program comprising software instructions which, when executed by a computer, implement a method according to any one of the preceding claims.

7. An electronic module (14) for calculating a cryptographic quantity (S) relating to an item of data (D), the electronic calculation module (14) being configured to calculate the cryptographic quantity (S) relating to the data (D) via a cryptographic algorithm, the cryptographic algorithm comprising the implementation of a product function (PROD) configured to find the product of two terms (A, B) over a finite Galois field with $2^T$ elements via successive carry-less multiplications, T being an integer greater than or equal to 8,

> **characterised in that** the implementation of the product function (PROD) comprises:

>> + first carry-less multiplication of the two terms (A, B),
>> + bit shift(s) for a most significant part ($C_1$) of the product (A*B) of the first carry-less multiplication,
>> + second carry-less multiplication of the result (C) of said shift with a first predefined term (U), the first predefined term (U) depending on an irreducible polynomial (P) of degree T associated with the finite Galois field,
>> + third carry-less multiplication of a most significant part ($Q_1$) of the product (C*U) of the second carry-less multiplication with a second predefined term (M), the second predefined term (M) depending on the irreducible polynomial (P) of degree T associated with the finite Galois field, and
>> + finding the product of the two terms (A, B) by applying the exclusive OR operator between a less significant part ($C_0$) of the product (A*B) of the first carry-less multiplication and a less significant part ($V_0$) of the product ($Q_1$*M) of the third carry-less multiplication,

> the irreducible polynomial (P) of degree T associated with the finite Galois field being written as follows:

$$P = \sum_{j=0}^{T} a_j \cdot X^j$$

> where $a_j \in \{0; 1\}$ for $j \in [0; T-1]$, $a_T = 1$;
> a complementary polynomial (P*) being written as follows:

$$P^* = \sum_{j=0}^{T} a_{T-j} \cdot X^j$$

> an inverse complementary polynomial (T) of degree T-2, representing the inverse of the complementary polynomial (P*) modulo $X^{T-1}$ written as follows:

$$T = \sum_{j=0}^{T-2} b_j \cdot X^j$$

where $b_j \in \{0; 1\}$ for $j \in [0; T\text{-}2]$
the first predefined term (U) satisfying:

$$U = \sum_{j=1}^{T-1} b_{T-j-1} \cdot X^j$$

the second predefined term (M) satisfying:

$$M = \sum_{j=0}^{T-1} a_j \cdot X^j$$

the bit shift(s) for the most significant part ($C_1$) of the product (A*B) of the first carry-free multiplication being a one-bit shift to the left.

8.  An electronic device (10) for processing data (D), the device (10) comprising:

    - an acquisition module (12) configured to acquire an item of data (D);
    - a calculation module (14) configured to calculate a cryptographic quantity (S) relating to the acquired data (D);
    - a transmission module (16) configured to transmit the calculated cryptographic quantity (S) to a receiving electronic device,

    **characterized in that** the calculation module (14) is according to the preceding claim.

-26-

20

-24-

-12-

-14-

22

-16-

-28-

10

# FIG.1

$x^8$ $x^{16}$ $x^{48}$

| A1 | 0 | A2 | 0 | 0 | 0 | A3 | |

$x^8$ $x^{16}$ $x^{48}$

| B1 | 0 | B2 | 0 | 0 | 0 | B3 | |

$x^8$ $x^{40}$ $x^{96}$

| C1 | 0 | 0 | C2 | 0 | 0 | C3 | |

## FIG.2

Acquisition d'une donnée D ⌇100

Calcul d'une quantité cryptographique S relative à la donnée D ⌇110

Transmission de la quantité cryptographique calculée S ⌇120

## FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2009543 B1

**Littérature non-brevet citée dans la description**

- **SCHWABE.** *All the AES you need on Cortex-M3 and M4*
- **CAMARA.** *Fast Software Polynomial Multiplication on ARM Processors Using the NEON Engine*
- **HARVEY.** *Fast Software Polynomial Multiplication over F*